# EUROPEAN PATENT APPLICATION

(11) **EP 1 759 593 A1**
(43) Date of publication of application: **07.03.2007**
(21) Application number: 05108152.9
(22) Date of filing: 06.09.2005
(51) Int. Cl.: A23J 3/22, A23J 3/08, A23J 3/10

(54) **Minced meat analogue and method of preparing such product**

(71) Applicant: NUG NAHRUNGS-UND GENUSSMITTEL VERTRIEBSGESELLSCHAFT MBH, 71334 Waiblingen (DE)
(72) Inventor: Van den Briel, Suzanne Titia, 5038 DK Tilburg (NL); Penders, Johannes Antonius, 5324 AV Ammerzoden (NL)
(74) Representative: van Westenbrugge, Andries

(57) **Abstract**

One aspect of the invention relates to a minced meat analogue that is composed of composite strands that contain a plurality of proteinaceous fibres and an interstitial material, said minced meat analogue containing:
• 10-25 wt.% of protein;
• 0.5-10 wt.% of a cross-linked polysaccharide selected from alginate, pectin and combinations thereof;
• 1.5-10 wt.% of fat;
• 0.0001-5 wt.% of red colouring substances; and
• 40-90 wt.% water;

wherein protein, cross-linked polysaccharide and water together constitute at least 80 wt.% of the fibres; and wherein at least 10% of the fat and most of the red colouring substances is contained in the interstitial material.
Another aspect of the invention relates to a method of preparing a minced meat analogue.

## Description

### TECHNICAL FIELD OF THE INVENTION

The present invention relates to a minced meat analogue and to a method of preparing such a minced meat analogue. The minced meat analogue according to the present invention has the appearance of freshly ground minced meat and can suitably be stored in a refrigerator for three weeks or more.

### BACKGROUND OF THE INVENTION

Protein is a major source of nutrition, the consumption of which is an important part of well-balanced diets. Although meat is a major source of protein, the presence of certain components in the meat (e.g. cholesterol and saturated fat) may present a health risk. Furthermore, certain individuals, regardless of the nutritional advantages to be gained from meat consumption, choose not to consume meat due to certain religious and/or personal beliefs. Thus, the development of alternative non-meat sources of protein has been and remains an important goal within the food industry.

Over the years, considerable effort has been spent in an effort to develop coarse, ground meat analogue products that have a meat-like flavour and texture, but which do not contain any meat.

US 2005/0003071 describes a process for making a vegetable base meat analogue, which may be used in a variety of vegetarian food products, such as burger patties and sausages. The US patent application teaches a process comprising the steps of:
- adding methylcellulose into a water/ice mix, followed by blending to form a cream;
- blending in a modified gluten;
- blending in oil to make an emulsion base;
- blending in a modified starch and flavouring ingredients to form a flavoured emulsion base;
- cooking the flavoured emulsion base to make a vegetable base meat analogue;
- cooling the vegetable base meat analogue; and
- grinding the vegetable base meat analogue into vegetable base meat analogue pieces. The US patent application further teaches that food colouring may be blended into the emulsion base together with the flavouring ingredients.

US 2002/0142086 describes a cooked sausage analogue product, comprising:
- a continuous phase binder composition containing powdered vegetable protein, a binder and water;
- a structured filamentous protein component dispersed within said continuous phase binder composition and included within a binder matrix formed from the binder composition; and
- proteinaceous components dispersed discontinuously within said matrix.
The continuous phase binder composition makes up at least 30 wt.% of the formulation of the sausage analogue product. The cooked sausage analogue product is manufactured by first preparing a batter containing a blend of proteins, vegetable oil, water, seasoning and colouring agent; followed by blending in (i) ground, hydrated filamentous dry protein, (ii) textured protein ground meat analogue, and (iii) thermally structured carbohydrate gel; and finally by stuffing the batter into casings and heating for 15 minutes at 85 °C to coagulate the continuous proteinaceous gel phase.

WO 03/061400 describes a method for the preparation of a meat substitute product, wherein:
1. a protein material, a hydrocolloid which precipitates with metal cations and water are added to one another,
2. the composition from step 1) is formed into a homogenous mixture,
3. the mixture from 2) is mixed with a solution of a metal cation with a valency of at least 2, in order to form a fibrous product,
4. the fibrous product is isolated, characterised in that
5. the protein material comprises a milk protein material, and
6. the mixture of milk protein material, hydrocolloid which precipitates with metal cations and water is formed in the presence of an amount of a phosphate material.
It is observed in the international patent application that finishing materials such as flavouring, colouring, vegetable or animal fat, vegetable or animal proteins, may be added. Furthermore, it is mentioned that these finishing materials are preferably added to the homogeneous mixture of protein, hydrocolloid and water, but that it is also possible to add and mix these fmishing materials after the fibrous product has been formed. It is furthermore stated in the application that the product obtained by the method can be converted into snacks, sausages or a sweet dessert-type product.

The aforementioned prior art publications fail to provide a method that enables the preparation of a meat analogue that exhibits the typical structure, texture and appearance of freshly minced meat. The meat analogue products described in these publications have in common that their appearance does not resemble that of products made of freshly prepared (minced) meat. Instead, the appearance of these prior art products is similar to that of cooked or otherwise heat-processed meat products.

### SUMMARY OF THE INVENTION

The inventors have developed a method to prepare a minced meat analogue that is very similar in structure, texture and appearance to freshly prepared minced meat. The minced meat analogue according to the present invention is composed of composite strands that contain a plurality of proteinaceous fibres and an interstitial material, said minced meat analogue containing protein, a cross-linked polysaccharide, fat, red colouring substances and water. The fibres are largely made up from protein, cross-linked polysaccharide and water, whereas the interstitial material contains a certain amount of fat and most of the red colouring substances. The composite strands within the minced meat analogue comprise proteinaceous fibres that are whitish in colour, whereas the interstitial material is at least partly reddish in colour, due to the presence of the red colouring substances. Thus, these strands look very similar to those found in minced meat: the fibres contained in the strands of the present analogue resemble collagenous material and the interstitial material mimics red tissue.

The minced meat analogue of the present invention can suitably be prepared by a process comprising the following steps:
- preparing a homogeneous mixture containing protein, a water-soluble polysaccharide that precipitates with multivalent metal cations and water;
- combining the homogeneous mixture with an aqueous solution of multivalent metal cations to produce proteinaceous fibres;
- isolating said proteinaceous fibres;
- mixing said proteinaceous fibres with covering materials to form a composite, said covering materials containing fat and red colouring substances; and
- mincing said composite to produce a minced meat analogue.

### BRIEF DESCRIPTION OF THE FIGURES

Figure 1 is a picture of a minced meat analogue according to the present invention.
Figure 2 is a drawing depicting a detail of the picture shown in figure 1.

### DETAILED DESCRIPTION OF THE INVENTION

Accordingly, one aspect of the invention relates to a minced meat analogue that is composed of composite strands that contain a plurality of proteinaceous fibres and an interstitial material, said minced meat analogue containing:
- 10-25 wt.% of protein;
- 0.5-10 wt.% of a cross-linked polysaccharide selected from alginate, pectin and combinations thereof;
- 1.5-10 wt.% of fat;
- 0.0001-5 wt.% of red colouring substances; and
- 40-90 wt.% water;
wherein protein, cross-linked polysaccharide and water together constitute at least 80 wt.% of the fibres; and wherein at least 10% of the fat and most of the red colouring substances is contained in the interstitial material. According to a preferred embodiment, at least 30%, more preferably at least 50% of all the fat present in the minced meat analogue is contained in the interstitial material.

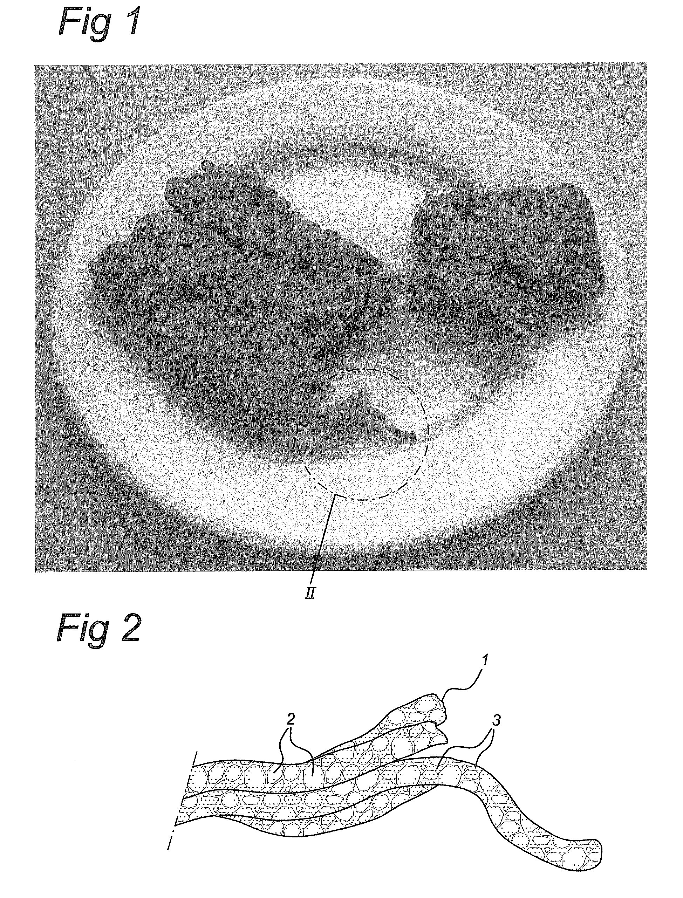

Figure 1 is a picture of minced meat analogue according to the present invention. The picture shows that the minced meat analogue is composed of a number of composite strands. Furthermore, figure 2 demonstrates that the appearance of the minced meat analogue of the present invention closely resembles that of ordinary minced meat.

Figure 2 depicts a detailed image of a couple of the strands 1 shown in figure 1. These strands 1 are composed of a plurality of proteinaceous fibres 2 and an interstitial material 3. The proteinaceous fibres 2 have a pale creamy colour whereas the interstitial material 3 has a red colour.

The term "red colouring substance" as used herein refers to substances that can suitably be used in small quantities, i.e. typically less than 2 wt.%, to impart an intense reddish colour. The present invention also encompasses the use of combinations of different colouring substances that together impart a reddish colour to the minced meat analogue. A "reddish colour" means that the colour is red or a shade of orange, brown or pink that is similar to red. Most preferably, the red colouring substances impart an essentially pure red colour to the minced meat analogue. The red colouring substances may be incorporated in the present analogue as such or as part of a natural ingredient and/or a compounded ingredient.

The red colouring substances employed in accordance with the present invention may have been introduced in the minced meat analogue in the form of a colouring material that essentially consists of colouring substances or a colouring material that contains colouring substances in combination with carrier materials and/or other functional food ingredients. These carrier materials and/or functional ingredients are not encompassed by the term "red colouring substance".

In a preferred embodiment, the minced meat analogue contains at least 12 wt.% protein, whereas the fat content preferably does not exceed 8 wt.%. The concentration of cross-linked polysaccharide typically does not exceed 7 wt.%. The amount of red colouring substances, preferably does not exceed 2.5 wt.%, more preferably it does not exceed 1.5 wt.%.

The minced meat analogue of the present invention may advantageously contain levels of fat that are substantially lower than those found in ordinary minced meat product (typically above 10 wt.%). In a particularly preferred embodiment, the minced meat product contains less than 6 wt.%, more preferably less than 5 wt.% of fat. It was found that even if such low fat minced meat analogues are fried, fat uptake is relatively low, resulting in a fried minced meat analogue having a fat content that is much lower than that of ordinary fried minced meat.

In order to determine how much of a particular ingredient is contained in the fibre and/or the interstitial material, the fibres are to be separated from the interstitial material and the concentrations of the ingredients are determined by means of suitable analytical techniques. The fibres and interstitial material may suitably be separated by placing the strands on a sieve and rinsing the strands with warm water until the clean fibres remain. Any small fibre material that has passed the sieves with the rinsing water may suitably be removed therefrom by centrifugation and be recombined with the fibres retained on the sieve for analysis.

Like ordinary minced meat, the present analogue is composed of strands of e.g. extruded material. The minced meat analogue of the present invention is typically characterised in that the strands display a marbled colour pattern that is made up of reddish and whitish patches. The reddish patches coincide with concentrations of red colouring substances and the whitish patches coincide with proteinaceous fibres that do not carry a significant amount of red colouring substances. Due to this marbled appearance of the strands, the present analogue closely resembles ordinary minced meat in both structure and appearance. The marbled appearance is particularly manifest if at least 50 wt.% of the fibres in the minced meat analogue have a length of at least 1 mm, preferably of at least 3 mm.

An important advantage of the minced meat analogue resides in the fact that it can suitably be pasteurised or sterilised, without affecting the fresh appearance of the product. Consequently, in a preferred embodiment the analogue has been pasteurised or sterilised. Most preferably, the product has been pasteurised, e.g. by heating it to at least 70 °C for at least 2 minutes.

According to a particularly preferred embodiment, the red colouring substances employed in the minced meat analogue discolour when subjected to severe heating conditions, such as those employed in shallow frying, deep frying or roasting. Thus, during e.g. frying or roasting the minced meat analogue will loose its reddish colour, whereas at the same time, due to Maillard reactions occurring on the surface of the fibres, a brownish colour is developed. As a result, the fried or roast minced meat analogue so obtained closely resembles ordinary fried or roast minced meat. A particularly suitable red colouring substance that exhibits this kind of discolourisation behaviour is betanin. Most preferably, betanin is employed in the form of a beet extract.

In order to further improve the storage stability of the present analogue, it is advantageous to include a preservative. According to a particularly preferred embodiment, the preservative is predominantly incorporated in the interstitial material. Typically at least 60%, most preferably at least 75% of the preservative present in the analogue is contained in the interstitial material. Preferred preservatives include salts of food acids, such a potassium sorbate and potassium lactate. According to a particularly preferred embodiment, the minced meat analogue contains between 0.3 and 3 wt.%, especially between 0.6 and 1.8 wt.% of lactate salt, preferably potassium lactate.

The interstitial material in the present minced meat analogue serves the purpose of binding together the fibres. In addition, the interstitial material influences the texture and appearance of the product in advantageous fashion. The fat present in the interstitial material is believed to impart a tender and smooth texture, whilst the red colouring substances produce the desirable marbled colour pattern that is typical of ordinary minced meat. Typically, the interstitial materials constitutes between 1 and 30 wt.%, preferably between 5 and 25 wt.% of the minced meat analogue.

The interstitial material in the present analogue product preferably contains 10-50 wt.% fat; 0.001-15 wt.% of red colouring substances; and optionally up to 60 wt.% water. More preferably, the interstitial material contains less than 12 wt.% of red colouring substances, most preferably less than 8 wt.% of red colouring substances. The interstitial material may essentially consist of fat and red colouring. Preferably, however, the interstitial material additionally contains at least 10 wt.% water. In case the interstitial material contains water, fat is preferably present as a dispersed phase of an oil-in-water emulsion. The organoleptic quality of the minced meat analogue is exceptionally good in case the interstitial material contains:
- 5-50 wt.%, preferably 10-40 wt.% of fat;
- 0.002-12 wt.%, preferably 0.003-8 wt.% of red colouring substances;
- 20-90 wt.%, preferably 30-80 wt.% of water; and
- 2-50 wt.% , preferably 10-40 wt.% of a binding agent.
The binding agent is suitably selected from the group consisting of cellulose derivatives, natural gums, egg protein, whey protein, starch, modified starch, carrageenan, and combinations thereof. More preferably, the binding agent is a mixture of (i) a protein selected from the group consisting of whey protein, egg protein and combinations thereof and (ii) a polysaccharide selected from cellulose derivatives and modified starch. Methyl cellulose is particularly preferred due to the fact that it acts as an effective binder under warm as well as cold conditions.

The protein contained in the fibres of the minced meat analogue is preferably selected from the group consisting of dairy protein, vegetable protein and combinations thereof. According to a particularly preferred embodiment, the protein of the fibres is dairy protein. Suitable sources of dairy protein include, whey protein concentrate, caseinate, rennet casein, milk powder (including skim milk powder), curd and cheese. Most preferably, most of the protein contained in the fibres of the present analogue is derived from curd, more preferably at least 80 wt.% of the protein is derived from curd. The curd employed in the present method most preferably is a skimmed milk curd. Thus, the introduction of fat through the interstitial material may be compensated for by a reduced fat content in the fibres, without adverse effect on product quality.

The fat employed in the present product preferably is a vegetable or dairy fat. Fat contained in the proteinaceous fibres, preferably is a non-hydrogenated fat, e.g. butter oil or vegetable oil. The fat contained in the interstitial material may be a hydrogenated or a non-hydrogenated fat. In case fat is present as a continuous phase in the interstitial material, the preferred fat is a high melting fat, especially a fat with a melting point in excess of 35, preferably in excess of 40 °C. In case the fat is present in the interstitial material in the form of an oil-in-water emulsion, the preferred fat is a non-hydrogenated vegetable or dairy fat.

Another embodiment of the invention relates to a packaged minced meat analogue as described herein before, wherein the package is hermetically sealed and contains an inert atmosphere of nitrogen and carbon dioxide. In particular if the analogue product has been pasteurised or sterilised, packaging under an atmosphere of nitrogen and carbon dioxide ensures that the product may be stored in a refrigerator for several weeks without loosing quality. Typically the atmosphere of nitrogen and carbon dioxide contains nitrogen and carbon dioxide in a volume ratio of 3:1 to 1:3.

Yet another embodiment of the present invention concerns the use of a minced meat analogue as defined above in the preparation of burgers, sausages, sauces or meals. The minced meat analogue of the present invention can be incorporated in the aforementioned products in the same way as ordinary minced meat. The typical structure and texture of the present product are retained in the final product even if such product is subjected to additional heat processing.

A further aspect of the invention relates to a method of preparing a minced meat analogue, said method comprising the following steps:
- preparing a homogeneous mixture containing 5-20 wt.% of protein; 0.1-10 wt.% of water-soluble polysaccharide selected from alginate, pectin and mixtures thereof; and at least 60 wt.% water;
- combining the homogeneous mixture with an aqueous solution containing 0.1-6 wt.% of multivalent metal cations to crosslink the water-soluble polysaccharide and to produce proteinaceous fibres;
- isolating said proteinaceous fibres;
- mixing said proteinaceous fibres with covering materials in a weight ratio of 50:1 to 3:1 to form a composite, said covering materials including, by weight of the total amount of covering materials:
   - 5-50 wt.% fat;
   - 0.01-12 wt.% of red colouring substances; and
   - optionally up to 60 wt.% water; and
- mincing said composite to produce a minced meat analogue.

The concentration of multivalent metal cations in the aqueous solution refers to the concentration of said metal cations alone, i.e. not to the amount of multivalent metal salt that may have been added to said solution.

The present method of preparing and isolating the proteinaceous fibres is very similar to the one described in WO 03/061400, which is incorporated herein by reference.

The term "homogenous mixture" as referred to in the present application encompasses emulsions, dispersions and solutions. Some proteins, for example, cheese milk protein, melt at elevated temperatures, producing a homogenous mixture comprising two liquid materials that are not soluble in one another, i.e. an emulsion. Proteins that do not melt will yield a homogeneous mixture in the form of a dispersion or a solution.

In the present method the homogeneous mixture may suitably be prepared by first mixing protein material and water, followed by the addition of alginate and/or pectin and further mixing. However, these components can also be admixed in a single step or in a different order. Mixing may be achieved by stirring, but also other mixing techniques, such as homogenization may be employed.

The water-soluble polysaccharide employed in the present method is characterised in that it precipitates with multivalent metal cations under the formation of a cross-linked network. Low methoxy pectins and alginates are particularly suitable water-soluble polysaccharides. The preferred alginate is sodium alginate. There are numerous commercially available alginates; in the context of the invention, use is made of, for example, Ca-reactive alginates such as of the type obtained from "Brown algae". Examples of suitable alginates are DMB sodium alginate (Manugel) from Kelco and FD125 from Danisco Cultor. It is also possible to use other alginates which form a precipitate with metal cations.

When the solution containing the multivalent metal cation is added to the homogenous mixture a fibrous product can be obtained in a controlled way by breaking up the skin of precipitating material that forms at the interface of the homogeneous mixture and the added solution. This may be done by continuously chopping said interface with e.g. paddles.
The multivalent metal cations contained in the aqueous solution are preferably selected from water-soluble calcium salts, water-soluble magnesium salts and mixtures thereof. Typically, these salts are applied in the aqueous solution at concentration levels at which these salts are essentially fully dissolved. Suitable calcium salts include calcium chloride, calcium acetate and calcium gluconate.

In the preparation of the proteinaceous fibres according to the present invention, the pH of the homogenous mixture is advantageously set to a value in the range from 4 to 7. The pH of the homogeneous mixture will effect the structure and texture of the proteinaceous fibres obtained in the present method. For example, to prepare a meat-type structure similar to beef, pork or chicken, starting from a milk protein material, the pH is preferably set to a value between 5.0 and 7.0. If a fish-type structure is desired, starting from milk protein material, the pH is preferably set to a value between 4.5 and 6.0.

The homogeneous mixture employed in the present method preferably contains protein and the water-soluble polysaccharide that precipitates with multivalent metal cations in a weight ratio within the range of 1:6 and 1:1.

According to a particularly preferred embodiment, the homogeneous mixture contains 5-15 wt.% of protein, 1-6 wt.% of the water-soluble polysaccharide and at least 70 wt.% of water. The homogeneous mixture may suitable contain some fat. Preferably, the amount of fat does not exceed 3 wt.%, more preferably it does not exceed 1 wt.%.

In case the homogeneous mixture is prepared with ingredients containing significant levels of multivalent metal cations (e.g. curd that contains significant amount of Ca²⁺), care should be taken not to prematurely cross-link the water-soluble polysaccharide. In order to prevent such premature cross-linking, a sequestering agent may suitably be employed to capture the free multivalent metal cations, before they can interact with the water-soluble polysaccharide. This is suitably done by combining such a sequestering agent with any ingredients of the homogeneous mixture that contribute substantial levels of multivalent metal cations in the presence of water, followed by the addition of the water-soluble polysaccharide. Typical examples of sequestering agents include phosphates, EDTA etc, phosphates being particularly preferred. These phosphates must be capable of forming a complex with divalent metal cations, such as calcium or magnesium, and are expediently selected from alkali metal and ammonium salts of phosphoric acid of polyphosphoric acid. Typical examples of suitable phosphates include disodium hydrogen phosphate, trisodium phosphate, sodium hexametaphosphate and sodium polyphosphate (NaP0₃)ₙ wherein n is suitably within the range of 10-40. The sequestering agents is typically added in an amount of 0.1-1.5% by weight, based on the total amount of all the constituents of the homogenous mixture.

The aqueous solution of multivalent metal cations that is used to produce the proteinaceous fibres, generally contains between 0.3 and 4 wt.%, more preferably between 0.5 and 2 wt.% of multivalent metal cations. The strength of the proteinaceous fibre, which is related to the sensation in the mouth when a bite is taken, is affected by the concentration of the multivalent cations in the aqueous solution. Typically, the higher the concentration of the multivalent cation the stronger the resulting fibre.

After the homogenous mixture has been prepared, which usually is done at a temperature of 20-90 °C, preferably of 30-90 °C and most preferably of 50-80 °C, the homogenous mixture is held at this temperature and the solution of the multivalent metal cation is added at approximately the same temperature.

The solution of multivalent metal cation and the homogeneous mixture are preferably combined gradually as this allows the fibre formation process to be controlled carefully. This may be achieved by combining two streams of these individual components, or alternatively by adding a stream of one component to the bulk of the other component. According to a preferred embodiment, the multivalent metal cation solution is gradually introduced into a stirred vessel containing the homogeneous mixture, e.g. by spraying the solution onto the surface of the homogeneous mixture. By stirring or chopping the surface of the homogeneous mixture whilst the aqueous solutions is being added, the proteinaceous skin that forms onto said surface is continuously ruptured, resulting in the formation of fibres. The pieces of ruptured skin tend to roll-up into cylindrical structures and thus attain a fibre-like appearance.

Once the proteinaceous fibres have been formed, these fibres are preferably washed in order to remove residues of metal cations. Next, excess moisture may be removed, for example, by pressing. After isolation, the proteinaceous fibres typically have a water content of 60-90 wt.%, preferably of 65-85 wt.%.

Following the isolation of the proteinaceous fibres, the covering materials are preferably gently mixed with the protein fibres in order not to significantly damage the fibres. It is important that throughout the process the size of fibres is not reduced to such a level that the fibres are no longer visually distinguishable in the final minced meat analogue. If this happens, the product will attain a homogeneous pink colour instead of the desired marbled red/white colour pattern. Typically, at least 50 wt.% of the fibres in the minced meat analogue have a length of at least 1 mm, preferably of at least 3 mm.

As mentioned herein before, the present minced meat analogue can suitably be pasteurised or sterilised. Optionally, especially in case long storage times are foreseen, the meat analogue is frozen after pasteurisation or sterilisation. In accordance with a preferred embodiment, the minced meat analogue is pasteurised or sterilised, and packaged. The product may be packaged either before or after packaging. Preferably, the minced meat analogue is pasteurised before packaging. Even more preferably, the minced meat analogue is pasteurised or sterilised and subsequently packaged in a hermetically sealed package under an inert atmosphere of nitrogen and carbon dioxide. In a particularly effective embodiment, the minced meat analogue is frozen after pasteurisation or sterilisation and packaged in frozen form. In this way production process and market distribution can be disconnected.

The covering materials employed in the present method may suitably include at least 10% water, by weight of the total amount of covering materials. Particularly good results are obtained if the covering materials include, by weight of the total amount of covering materials:
- 5-50 wt.%, preferably 10-40 wt.% of fat;
- 0.002-12, preferably 0.003-8 wt.% of red colouring substances;
- 20-90 wt.%, preferably 30-80 wt.% of water; and
- 2=50 wt.%, preferably 10-40 wt.% of a binding agent.

The fat and binding agent are suitably admixed to the proteinaceous fibres in the form of an oil-in-water emulsion. The oil-in-water emulsion may suitably contain other ingredients such as preservatives. However, preservatives can also be introduced separate from the oil-in-water emulsion.

Preferred binding agents include cellulose derivatives, natural gums, egg protein, whey protein, starch, modified starch, carrageenan, and combinations thereof. A particularly preferred binding agent is whey protein, especially high gel whey protein. High gel whey protein when dispersed in water, forms a highly viscous solution that forms a gel when sufficient salt is added. High gel whey protein is commercially available e.g. under the product name Nutrilac® PO-7730 (Arla Food Ingredients, Denmark).

The covering materials advantageously include one or more preservatives, especially between 0.3 and 15 wt.% of lactate by weight of the total amount of covering materials, potassium lactate being particularly preferred.

The invention is further illustrated by means of the following examples:

### EXAMPLES

### Example 1

Skimmed milk was bactofugated at 50 °C and then pasteurised at 75 °C for 15 sec and curdled by means microbial rennet. To 600 grams of the curd so obtained, 400 gram water and 13 gram sodium polyphosphate (NaPO₃)ₙ where n is approximately 25, were added to the curd. After heating (melting), the pH was brought to approximately 7 using NaOH in order to increase the effectiveness of calcium binding. A solution of 22.5 gram sodium alginate (Kelco® DMB) in 500 g water was prepared and the mixture containing curd, sodium polyphosphate and water was mixed with the solution containing sodium alginate, with stirring (Hobart mixer with dough kneader at low speed). Finally, under continuous stirring, the mixture was sprayed with 450 gram 4 % (m/m) CaCl₂ and further mixed to form the fibres.The fibres were isolated using sieving, after which they were washed.
After washing, the composition of the fibres was as follows:

| | Wt.% |
|---|---|
| Dry matter | 23 |
| Protein | 14 |
| Fat | 0.2 |
| Water | 77 |

Next, 1000 g of the fibres were mixed in a Hobart mixer with 100 g of an oil-in-water emulsion of the following composition:

| | Wt.% |
|---|---|
| Water | 46 |
| High gel whey protein¹ | 14 |
| Sunflower oil | 20 |
| Potassium lactate ² | 20 |

| | |
|---|---|
| ¹ Nutrilac® PO-7730, ex Arla Food Ingredients, Denmark ² Purasel® P 60% (aqueous solution), ex Purac, the Netherlanst | |

The oil-in-water emulsion was prepared using a Brown combimax 650 mixer at high speed. Cooled water was introduced in the mixer. Next, potassium lactate, whey protein and oil were added under continuous stirring whilst the temperature of the mixture was maintained at below 10 °C. Stirring was continued until a smooth, homogeneous mass had been obtained.

After the emulsion had been mixed with the fibres with the help of a Hobart mixer (temperature below 5 °C), the following ingredients were added under mixing conditions in the indicated amounts:

| | Grams |
|---|---|
| Flavour | 12.5 |
| Carboxymethyl cellulose¹ | 15 |
| Egg protein | 20 |
| Modified potato starch ² | 5 |
| Red colouring (E162)³ | 3 |
| Paprika powder | 3.5 |
| Caramel (E150a)⁴ | 6 |

| | |
|---|---|
| ¹ Methocel A, ex Dow Chemical ² ex Griffith Laboratories, Herentals, Belgium ***s.v.p. productnaam doorgeven.*** *³* Beet red ZJB003 ex Griffith Laboratories, Herentals, Belgium ⁴ powder, containing 97% carbohydrates, ex Griffith Laboratories, Herentals, Belgium | |

The mixture of fibres and covering materials was fed into a mincer (Krafft) and processed into a minced meat analogue. The minced meat analogue so obtained had an appearance that was very similar to that of freshly prepared minced meat. The product was pasteurised by keeping it in an oven at a temperature of 120 °C for 15 minutes (resulting in a core temperature of more than 70 °C during at least 2 minutes), cooled to below 7 °C and subsequently packaged in a sealed package under an atmosphere of nitrogen and carbon dioxide (50:50 v/v). It was found that the packaged minced meat analogue could be stored in a refrigerator for more than 3 weeks.

### Examples 2A and 2B

Example 1 was repeated, except that instead of the emulsion 20 g of sunflower oil (example 2A) or hardened palm oil (example 2B) was added. The hardened palm oil (ex Romi Smilfood, the Netherlands) had a melting point of 45 °C.

### Example 3

Example 1 was repeated, except that instead of the emulsion 20 g of sunflower oil and 14 g of high gel whey protein were separately added to the proteinaceous fibres.

### Examples 4A, 4B and 4C

Example 1 was repeated, except that the high gel whey protein in the emulsion was replaced by an equal amount of:

| | |
|---|---|
| caseinate (ex DMV International) | - Example 4A |
| egg protein (ex. NIVE, Nunspeet, the Netherlands); | - Example 4B |
| whey protein concentrate (Lacprodan® ex Arla Food ingredients) | -Example 4C |

### Example 5

The minced meat analogues described in the above examples were shallow fried in oil at 170 °C for 3 minutes. To this end approximately 125 g of the loose analogue material was introduced into a heated frying pan containing hot oil. The amount of oil absorbed as well as the amount of water lost during frying was determined. Furthermore, moisture content and fat content were determined before and after frying. The results of these analyses are summarised in the following table:

| Ex. | Weight before frying (g) | Weight after frying (g) | Weight loss (%) | Before frying | | After frying | |
|---|---|---|---|---|---|---|---|
| | | | | Moisture (wt.%) | Fat (wt.%) | Moisture (wt.%) | Fat (wt.%) |
| 1 | 125 | 105 | 16 | 66.5 | 2.7 | 47.6 | 13.4 |
| 2A | 130 | 112.5 | 14 | 64.1 | 2.4 | 46.6 | 10.1 |
| 2B | 117 | 96 | 18 | 64.6 | 2.6 | 51.7 | 11.7 |
| 3 | 130 | 110 | 15 | 64 | 2.4 | 43.0 | 11.9 |
| 4A | 127 | 113.5 | 11 | 64.6 | 2.5 | 47.7 | 11.2 |
| 4B | 130 | 116 | 11 | 64.8 | 2.6 | 48.2 | 12.4 |
| 4C | 130 | 114.5 | 12 | 65.2 | 2.5 | 50.9 | 11.5 |

Furthermore, the fried products were evaluated by an expert panel. The results of the evaluation are summarised in the following table:

| Ex. | Ranking in order of preference | Comments |
|---|---|---|
| 1 | 1 | Excellent texture and frying behaviour |
| 2A | 6/7 | A bit dry and 'gritty' |
| 2B | 2 | Excellent texture, tends to stick somewhat to the frying pan |
| 3 | 6/7 | Pale appearance and not much bite |
| 4A | 4 | Slightly less juice and a bit 'gritty' |
| 4B | 3 | Juicy, but slightly less bite |
| 4C | 5 | Less bite and slightly 'gritty' |

Finally, the minced meat analogue of example 1 was compared to ordinary pork and beef minced meat. The results of this comparison are depicted in the following table:

| Product | Weight loss (%) | Before frying | | After frying | |
|---|---|---|---|---|---|
| | | Moisture (%) | Fat (%) | Moisture (%) | Fat (%) |
| Example 1 | 16 | 65.5 | 2.7 | 47.6 | 13.4 |
| Pork minced meat | 43 | 67.4 | 12.7 | 37.1 | 28.1 |
| Beef minced meat | 33 | 66.7 | 12.8 | 47.0 | 25.1 |

All three products were found to be of excellent quality. These results show that during frying the minced meat analogue of the present invention looses substantially less weight than the pork and beef minced meat products. In addition, the minced meat analogue offers the advantage that, even after frying, it contains substantially less fat than the minced meat products.

## Claims

1. A minced meat analogue that is composed of composite strands that contain a plurality of proteinaceous fibres and an interstitial material, said minced meat analogue containing:
• 10-25 wt.% of protein;
• 0.5-10 wt.% of a cross-linked polysaccharide selected from alginate, pectin and combinations thereof;
• 1.5-10 wt.% of fat;
• 0.0001-5 wt.% of red colouring substances; and
• 40-90 wt.% water;
wherein protein, cross-linked polysaccharide and water together constitute at least 80 wt.% of the fibres; and wherein at least 10% of the fat and most of the red colouring substances is contained in the interstitial material.

2. Minced meat analogue according to claim 1, wherein said minced meat analogue is **characterised in that** the strands display a marbled colour pattern that is made up of reddish and whitish patches.

3. Minced meat analogue according to claim 1 or 2, wherein the minced meat analogue has been pasteurised or sterilised.

4. Minced meat analogue, according to any one of the preceding claims, wherein the interstitial material constitutes between 1 and 30 wt.%, preferably between 5 and 25 wt.% of the minced meat analogue.

5. Minced meat analogue according to claim any one of the preceding claims, wherein the interstitial material contains 10-50 wt.% fat; 0.01-5 wt.% of red colouring; and optionally up to 60 wt.% water.

6. Minced meat analogue according to claim 5, wherein the interstitial materialcontains:
• 5-50 wt.% fat;
• 0.002-12 wt.% of red colouring substances;
• 20-90 wt.% water; and
• 2-50 wt.% of a binding agent.

7. Minced meat analogue according to claim 6, wherein the binding agent is selected from the group consisting of cellulose derivatives, natural gums, egg protein, whey protein, starch, modified starch, carrageenan, and combinations thereof.

8. Minced meat analogue according to claim 7, wherein the binding agent is a mixture of (i) a protein selected from the group consisting of whey protein, egg protein and combinations thereof and (ii) a polysaccharide selected from cellulose derivatives and modified starch.

9. Minced meat analogue according to any one of the preceding claims, wherein the protein contained in the proteinaceous fibres is dairy protein.

10. Minced meat analogue according to any one of the preceding claims, wherein the interstitial material contains between 0.5 and 15 wt.% of lactate salt, preferably potassium lactate.

11. A packaged minced meat analogue according to any one of the preceding claims, wherein the package is hermetically sealed and contains an inert atmosphere of nitrogen and carbon dioxide.

12. A method of preparing a burger, a sausage, a sauce of a meal, said process comprising the incorporation of a meat analogue according to any one of claims 1-10.

13. A method of preparing a minced meat analogue, said method comprising the following steps:
• preparing a homogeneous mixture containing 5-20 wt.% of protein; 0.1-10 wt.% of water-soluble polysaccharide selected from alginate, pectin and mixtures thereof; and at least 60 wt.% water;
• combining the homogeneous mixture with an aqueous solution containing 0.1-6 wt.% of multivalent metal cations to crosslink the water-soluble polysaccharide and to produce proteinaceous fibres;
• isolating said proteinaceous fibres;
• mixing said proteinaceous fibres with covering materials in a weight ratio of 50:1 to 3:1 1 to form a composite, said covering materials including , by weight of the total amount of covering materials:
- 5-50 wt.% fat;
- 0.01-5 wt.% of red colouring substances; and
- optionally up to 60 wt.% water; and
• mincing said composite to produce a minced meat analogue.

14. Method according to claim 13, wherein the minced meat analogue is pasteurised or sterilised, and packaged.

15. Method according to claim 13 or 14, wherein the covering materials include:
• 5-50 wt.% fat;
• 0.002-10 wt.% of red colouring substances;
• 20-90 wt.% water; and
• 2-50 wt.% of a binding agent.

16. Method according to claim 15, wherein the binding agent is selected from the group consisting of cellulose derivatives, natural gums, egg protein, whey protein, starch, modified starch, carrageenan, and combinations thereof.

17. Method according to claim 16, wherein the binding agent is high gel whey protein.

18. Method according to any one of claims 15-17, wherein fat and binding agent are admixed to the proteinaceous fibre in the form of an oil-in-water emulsion.
